# EUROPEAN PATENT APPLICATION

(11) **EP 4 382 234 A1**
(43) Date of publication of application: **12.06.2024**
(21) Application number: 23178438.0
(22) Date of filing: 09.06.2023
(51) Int. Cl.: B23D 61/04, B23D 61/02

(54) **INTEGRATED STEPPED TOOTH AND SAW BLADE**

(30) Priority: 09.12.2022 CN 202223299910 U
(71) Applicant: Linyi Youcheng Saw Tech Service Co Ltd, Linyi City Shandong 276000 (CN)
(72) Inventor: YI, Chen, 276000 Linyi City, Shandong (CN)
(74) Representative: DREISS Patentanwälte PartG mbB

(57) **Abstract**

The invention relates to an integrated stepped tooth and to a combination saw blade, comprising a sawtooth body (1), which is equipped with a front corner surface (4), a back corner surface (5), and a side surface (6). The intersection of the front corner surface (4) and the back corner surface (5) forms a multi segment polygonal cutting edge (8) for contacting the material to be cut, and the intersection of the front corner surface (4) and the side surface (6) forms a side edge (7); The feature is that the multi segment broken line cutting edge (8) includes a first cutting edge (b1) located in the middle position, with an even number of cutting edges (b2) on both sides of the first cutting edge (b1), and an odd number of cutting edges (b1 ') on one side of the side edge (7) facing the first cutting edge (b1), The odd segment cutting edge one (b1 ') is directly connected to the even segment cutting edge one (b2), or there is a stepped edge between the odd segment cutting edge one (b1') and the even segment cutting edge one (b2); The end of the step edge near the first cutting edge (b1) is the starting end, and the end of the step edge near the side edge (7) is the end. The step edge is provided with alternating odd segment cutting edge two (b3) and even segment cutting edge three (b4) between the starting end and the end. The starting end of the step edge is connected to even segment cutting edge one (b2) through odd segment cutting edge two (b3), The end of the stepped blade is connected to the odd segment cutting edge one (b1 ') through the even segment cutting edge three (b4).

## Description

### Technical field

This utility model belongs to the field of PCD saw blade production and processing, in particular to an integrated stepped tooth and its combination saw blade.

### Background technology

PCD saw blade refers to a diamond layer welded to the saw teeth for cutting, which has high hardness and good wear resistance, and can effectively cut hard and brittle materials such as metals, ceramics, and stones. The existing PCD saw blades mainly use saw blades with flat teeth and trapezoidal tooth spacing when cutting aluminum profiles. This is because trapezoidal teeth are not prone to edge breakage, so trapezoidal teeth are mainly used for cutting. However, the surface of trapezoidal teeth after cutting is relatively rough, and the edge angles on both sides of the flat teeth are prone to edge breakage, resulting in a usually small processing amount of flat teeth. Therefore, flat teeth are mainly used for trimming the cutting surface to remove burrs on the cutting surface, Complete the cutting of aluminum profiles by setting the spacing between flat and trapezoidal teeth.

However, there are the following defects in the use of the spacing tooth type saw blade: 1. The chips generated during cutting inevitably collide with the teeth. Due to the fact that flat teeth do not have a side slope like trapezoidal teeth to block them, when chips collide with flat teeth, the edge angles on both sides of the flat teeth are easily broken, and the spacing tooth structure makes the probability of chips hitting the flat teeth high; 2. In the entire saw blade, only half of the serrations (trapezoidal teeth) are used for cutting, resulting in low cutting efficiency and rapid wear of the blade edge; 3. The thickness of aluminum profiles on the market varies from 0.5mm to 10mm. The existing saw blades have poor universality and can only cut some thickness of aluminum profiles, making them unsuitable for cutting all thickness aluminum profiles.

### Utility Model Content

The technical problem to be solved by this utility model is to overcome the shortcomings of existing technology and provide an integrated stepped tooth and its combination saw blade. The multi segment broken line cutting edge of the integrated stepped tooth adds a stepped blade with multiple corners on the basis of the original trapezoidal blade, greatly increasing the number of tooth tips of the saw teeth, improving the sharpness of the teeth and chip removal performance.

The integrated stepped teeth described in [0005] include a sawtooth body, which is equipped with a front corner surface, a back corner surface, and a side surface. The intersection of the front corner surface and the back corner surface forms a multi segment broken line cutting edge for contacting the material to be cut, and the intersection of the front corner surface and the side surface forms a side edge; The multi segment broken line cutting edge comprises a first cutting edge located in the middle position, with an even number of cutting edges on both sides, an odd number of cutting edges on one side facing the first cutting edge, an odd number of cutting edges directly connected to the even number of cutting edges, or a stepped edge between the odd number of cutting edges and the even number of cutting edges; The end of the step edge close to the first cutting edge is the starting end, and the end of the step edge close to the side edge is the end. The step edge has alternating odd segment cutting edge 2 and even segment cutting edge 3 between the starting end and the end. The starting end of the step edge is connected to even segment cutting edge 1 through odd segment cutting edge 2, and the end of the step edge is connected to odd segment cutting edge 1 through even segment cutting edge 3.

Preferably, the vertical distance between the connecting end of the odd segment cutting edge and the side edge and the entire cutting edge is A, and the value of A decreases as the hardness of the material being cut increases. The value of A is controlled within 0.02-0.5 times the width of the cutting head B.

Preferably, the horizontal distance between one or two ends of the odd segment cutting edge is N, the width of the sawtooth body is B, and N: B is 0.05-0.4; The angle between odd segment cutting edge one and odd segment cutting edge two and the side edge is θ 2, θ 2 is 70-110 °; The multi segment broken line cutting edge is equipped with multiple corners, and a chamfer structure is arranged at the corners, with a radius R of 0-0.5mm of the chamfer structure; The included angles between the even segment cutting edge one, even segment cutting edge three, and all the cutting edges are θ 1, θ 1 is 100-150 °; The length of the first cut edge is M, the width of the serrated body is B, and M: B is 0.2-0.8.

The combined saw blade described in [0008] includes a saw blade body, which is equipped with multiple serration seats. Each serration seat is fixed with the aforementioned integrated step teeth, and the corresponding multi segment broken line cutting edge corners on the adjacent serration seats are staggered.

The integrated stepped teeth described in [0009] include a sawtooth body, which is equipped with a front corner surface, a back corner surface, and a side surface. The intersection of the front corner surface and the back corner surface forms a multi segment broken line cutting edge for contacting the material to be cut, and the intersection of the front corner surface and the side surface forms a side edge; The multi segment broken line cutting edge comprises a first cutting edge located in the middle position, with even segment cutting edge 1 on both sides of the first cutting edge, even segment cutting edge 2 on one side facing the first cutting edge, and a stepped edge between even segment cutting edge 2 and even segment cutting edge 1; The end of the step edge close to the first cutting edge is the starting end, and the end of the step edge close to the side edge is the end. The step edge has alternating odd segment cutting edge 2 and even segment cutting edge 3 between the starting end and the end. The starting end of the step edge is connected to even segment cutting edge 1 through odd segment cutting edge 2, and the end of the step edge is connected to even segment cutting edge 2 through odd segment cutting edge 2.

Preferably, the vertical distance between the connecting end of the even segment cutting edge two and the side edge and all the cutting edges is A, and the value of A decreases with the increase of the hardness of the material being cut; The angle between the odd segment cutting edge two and the side edge is θ 2, θ 2 is 70-110 °.

Preferably, the included angles between the even segment cutting edge one, the even segment cutting edge three, and all the cutting edges are θ 1, θ 1 is 100-150 °.

Preferably, the length of the first cut edge is M, the width of the serrated body is B, and M: B is 0.2-0.8.

The combination saw blade described here includes a saw blade body, which is equipped with multiple sawtooth seats. The two types of integrated step teeth are alternately arranged on the sawtooth seat, and the corresponding multi segment broken line cutting edge corners are staggered among the integrated step teeth on adjacent sawtooth seats.

Compared with the prior art, the beneficial effects of this utility model are:
1. The cutting edge of the integrated stepped tooth is a multi segment broken line cutting edge. Depending on the cutting material, the number of odd segment cutting edges 2 and even segment cutting edges 3 in the stepped edge can be selected and combined to create more tooth tips in the combined saw blade, greatly improving the sharpness and chip removal performance of the combined saw blade;
2. By combining the integrated stepped teeth, the corners of the multi segment broken line cutting edge are staggered to achieve the cutting of multiple materials. At the same time, the increase in tooth tips enables the same saw blade to complete the cutting of aluminum profiles with thicknesses of 0.5mm to 10mm. Compared to the existing technology, aluminum profiles with different thicknesses require multiple saw blades to replace and cut, this utility model greatly improves the universality of the combined saw blade;
3. The combination saw blade is equipped with an integrated stepped tooth with an odd number of cutting edges, which is used for cutting materials such as aluminum profiles through all cutting edges, even number of cutting edges, and stepped edges. The odd number of cutting edges is used for trimming the cutting surface to remove burrs generated by cutting. Compared with traditional interval tooth saw blades, each tooth can be cut while ensuring cutting quality, and the cutting efficiency is doubled;
4. During cutting, flying chips are more likely to hit the entire cutting edge, even segment cutting edge, or stepped edge. At the same time, the length of odd segment cutting edge is smaller, greatly reducing the probability of edge collapse at the intersection of the side edge and odd segment cutting edge.

### Illustrated Figures

Figure 1 is a schematic diagram of the structure of the combined saw blade disclosed in this utility model;
Figure 2 is a structural schematic diagram of Example 1;
Figure 3 shows the main view of Example 1;
Figure 4 is a left side view of Example 1;
Figure 5 is a schematic diagram of the structure of the multi segment broken line cutting edge in Example 1;
Figure 6 is a schematic diagram of the structure of a multi segment broken line cutting edge in Example 2;
Figure 7 is a schematic diagram of the structure of the multi segment broken line cutting edge in Example 3;
Figure 8 is a structural schematic diagram of Example 4;
Figure 9 is a structural schematic diagram of Example 5;
Figure 10 is a structural schematic diagram of Example 6;
Figure 11 is a schematic diagram of the structure of a multi segment broken line cutting edge with an arc structure;
Figure 12 is a schematic diagram of the structure of a multi segment broken line cutting edge with a curved structure.

In the figure, 1. Sawtooth body; 2. Saw blade body; 3. Serrated seat; 4. Front corner surface; 5. Rear corner surface; 6. Sides; 7. Side blade; 8. Multi segment broken line cutting edge; 9. Corner; B1. All edge cutting; B1 ', odd segment cutting edge one; B2. Even segment cutting edge one; B2 ', even segment cutting edge two; B3. Odd segment cutting edge two; B4. Even segment cutting edge three.

### Specific implementation method

The following is a further explanation of the utility model in conjunction with the accompanying drawings:

### Example 1:

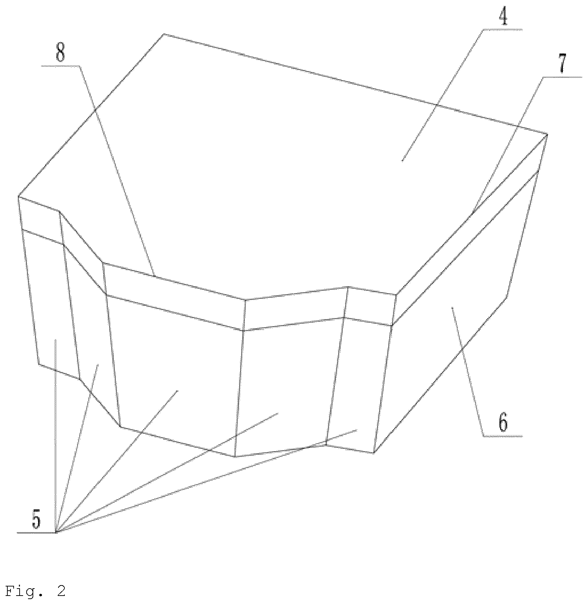

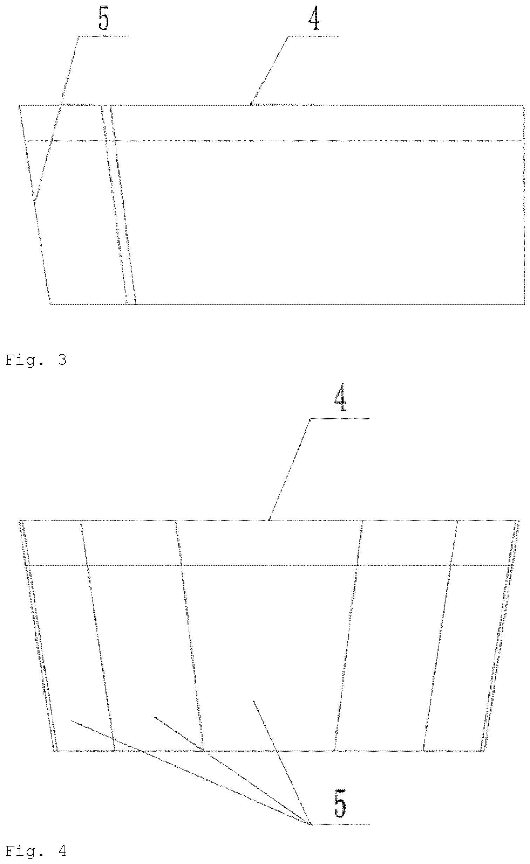

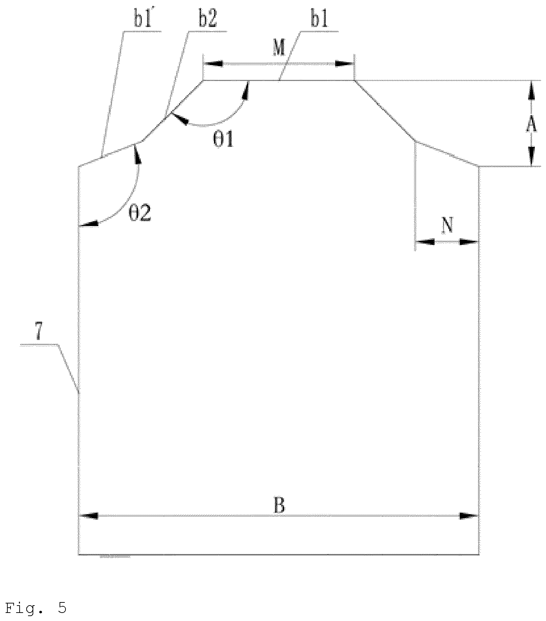

As shown in Figures 2 to 4, an integrated stepped tooth includes a sawtooth body 1, which is equipped with a front corner surface 4, a back corner surface 5, and a side surface 6. The intersection of the front corner surface 4 and the back corner surface 5 forms a multi segment broken line cutting edge 8 for contacting the material to be cut. The multi segment broken line cutting edge 8 cuts the material to be cut, and the intersection of the front corner surface 4 and the side surface 6 forms a side edge 7; As shown in Figure 5, the multi segment polygonal cutting edge 8 includes the entire cutting edge b1 located in the middle position, with even segment cutting edge b2 on both sides of the entire cutting edge b1. The angle between the entire cutting edge b1 and even segment cutting edge b2 is θ 1, θ 1. Control at 100-150 °, preferably 135 °; On the side facing all the cutting edges b1 of side edge 7, there is an odd segment cutting edge b1 '. The odd segment cutting edge b1' is directly connected to the even segment cutting edge b2, and the angle between the odd segment cutting edge b1 'and side edge 7 is θ 2, θ 2. Control at 70-110 °, preferably 100 °.

The vertical distance between the connecting end of the odd segment cutting edge b1 'and the side edge 7 and the entire cutting edge b1 is A, and the value of A is controlled within 0.02-0.5 times the width of the cutting head B. During machining, the value of A decreases with the increase of the hardness of the material being cut.

The length of the first cut edge b1 is M, the horizontal distance between the two ends of the odd cut edge b1 'is N, the width of the serrated body 1 is B, M: B is 0.2-0.8, and N: B is 0.05-0.4.

In this embodiment, during cutting, the even numbered cutting edges b1 and its two sides are used for cutting the material to be cut, while the odd numbered cutting edges b1 'are used for trimming the cutting surface. When the chips collide, as the even numbered cutting edges b1 and its two sides are located at the front end of the odd numbered cutting edges b1', it is not easy for the chips to collide with the odd numbered cutting edges b1 ', The edge angle at the connection end between the odd segment cutting edge b1 'and the side edge 7 is not prone to edge breakage.

### Example 2:

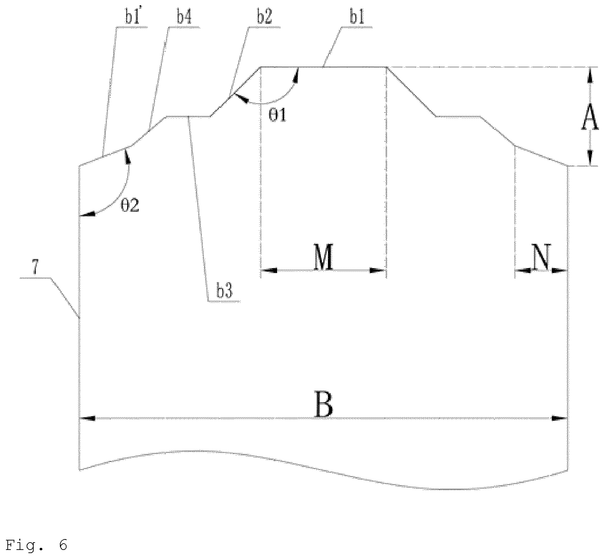

As shown in Figure 6, an integrated stepped tooth is provided with a stepped edge between the odd segment cutting edge b1 'and the even segment cutting edge b2; The end of the step edge near the first cutting edge b1 is the starting end, and the end of the step edge near the side edge 7 is the end. The step edge has one or more alternating sets of odd segment cutting edges 2 b3 and even segment cutting edges 3 b4 between the starting end and the end. The angles between odd segment cutting edges 2 b3, odd segment cutting edges 1 b1 ', and side edge 7 are both θ 2. The angle between even segment cutting edge three b4, even segment cutting edge one b2, and all cutting edges b1 is θ 1. The number of odd segment cutting edges two b3 and even segment cutting edges three b4 is adjusted according to the width B of the sawtooth body 1. The starting end of the step edge is connected to the even segment cutting edge one b2 through the odd segment cutting edge two b3, and the end of the step edge is connected to the odd segment cutting edge one b1 'through the even segment cutting edge three b4. The others are the same as Example 1.

In this embodiment, the multi segment broken line cutting edge 8 is used for cutting operations, except for the odd segment cutting edge - b1 '; Odd segment cutting edge - b1 'is used for trimming the cutting surface.

### Example 3:

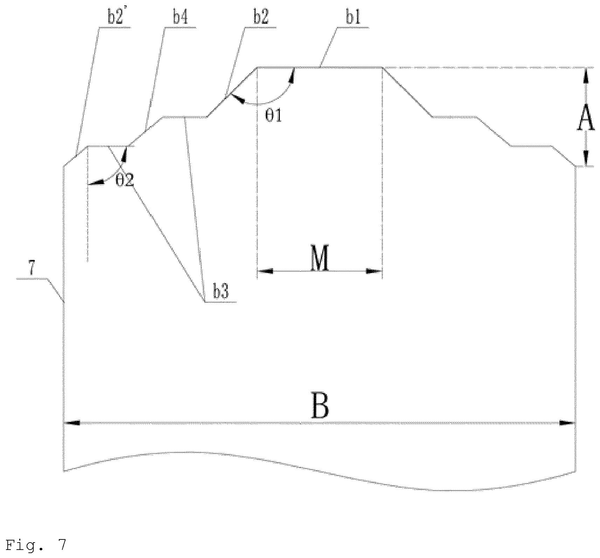

As shown in Figure 7, an integrated stepped tooth is provided with an even segment cutting edge 2 b2 'on one side of the side edge 7 towards the first cutting edge b1, and a stepped edge is provided between the even segment cutting edge 2 b2' and the even segment cutting edge 1 b2; The end of the step blade near the first cutting edge b1 is the starting end, and the end of the step blade near the side edge 7 is the end. The step blade has alternating odd segment cutting edge 2 b3 and even segment cutting edge 3 b4 between the starting end and the end. The starting end of the step blade is connected to even segment cutting edge 1 b2 through odd segment cutting edge 2 b3, and the end of the step blade is connected to even segment cutting edge 2 b2 'through odd segment cutting edge 2 b3. Among them, the number of odd segment cutting edges 2b3 and even segment cutting edges 3b4 is adjusted according to the width B of the sawtooth body 1. The angle between odd segment cutting edges 2b3 and side edge 7 is θ 2. The angles between even segment cutting edge one b2, even segment cutting edge three b4, and even segment cutting edge two b2 'and all the cutting edges b1 are: θ 1. The others are the same as Example 1.

In this embodiment, there is no odd segment cutting edge - b1 ', so it can only be used for cutting operations. To perform edge trimming operations while cutting, it needs to be combined with the integrated stepped teeth in Example 1 or Example 2.

### Example 4:

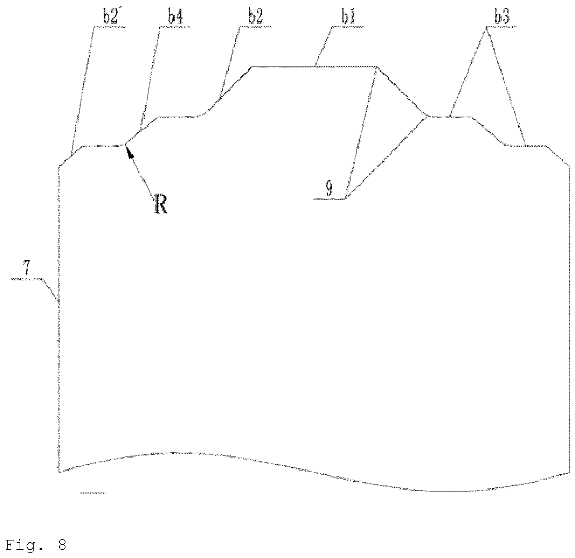

As shown in Figure 8, an integrated stepped tooth is provided with multiple corners 9 on the multi segment broken line cutting edge 8. Corner 9 is formed by the intersection of any two adjacent cutting edges in the multi segment broken line cutting edge 8. During machining, any one or more corners 9 can be chamfered to make corner 9 a chamfered structure, and the radius R of the chamfered structure is controlled between 0 and 0.5mm. The others are the same as Example 1, Example 2, or Example 3.

### Example 5:

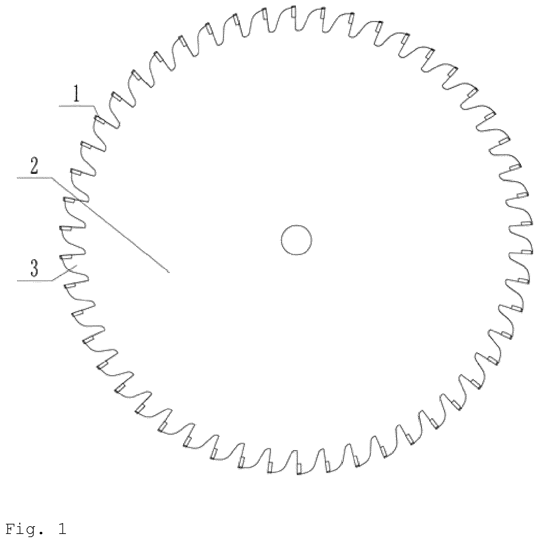

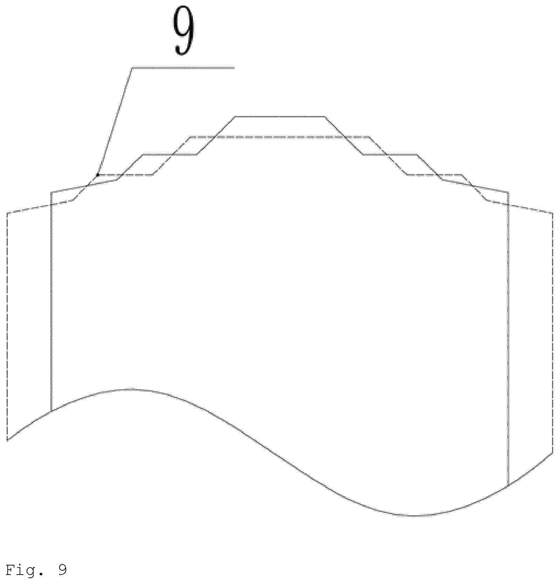

As shown in Figures 1 and 9, a combined saw blade includes a saw blade body 2, which is equipped with multiple serrated seats 3. Each serrated seat 3 is fixed with integrated step teeth as described in Example 1, Example 2, or Example 4. By adjusting the length of each cutting edge in the multi segment broken line cutting edge 8, the corners 9 of the corresponding multi segment broken line cutting edge 8 on the adjacent serrated seats 3 are staggered. In the multi segment broken line cutting edge 8, each cutting edge forms a corner 9 at the connection of adjacent cutting edges due to different inclination angles, and the tooth tip of the serration is formed at the corner 9.

In this embodiment, during machining, the step edges of the multi segment broken line cutting edge 8 in the integrated step teeth on adjacent serrated seats 3 can have the same number of odd segment cutting edges 2b3 and even segment cutting edges 3b4, or different numbers of odd segment cutting edges 2b3 and even segment cutting edges 3b4.

### Example 6:

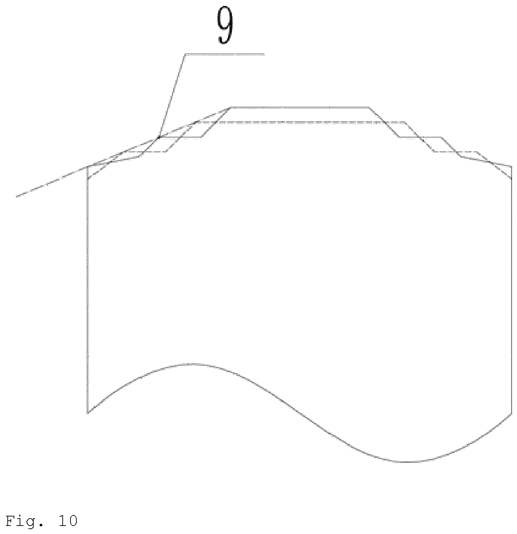

As shown in Figure 10, a combination saw blade includes a saw blade body 2, which is equipped with multiple sawtooth seats 3. The integrated step teeth described in either Example 1, Example 2, or Example 4 and the integrated step teeth described in Example 3 or Example 4 are alternately arranged on the saw tooth seat 3, and the corresponding multi segment broken line cutting edge 8 on the adjacent sawtooth seats 3 is staggered at the corner 9. The others are the same as Example 5.

Any one of the integrated stepped teeth in this utility model can be ground using laser processing equipment. During processing, the cutting edges in the multi segment broken line cutting edge 8, such as the first cutting edge b1, odd segment cutting edge b1 ', even segment cutting edge b2', even segment cutting edge b2 ', odd segment cutting edge b3, and even segment cutting edge 3b4, can be one or more of a linear structure, as shown in Figures 5-7.

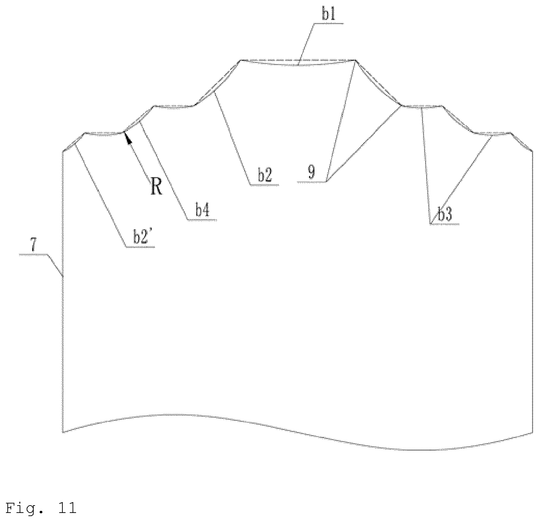

As shown in Figure 11, the cutting edge can be an arc structure, and the cutting edge of the arc structure can determine the angle of the cutting edge through the connection of the two ends, that is, the integrated stepped teeth shown in Figure 11 are deformed from the cutting edge of the linear structure.

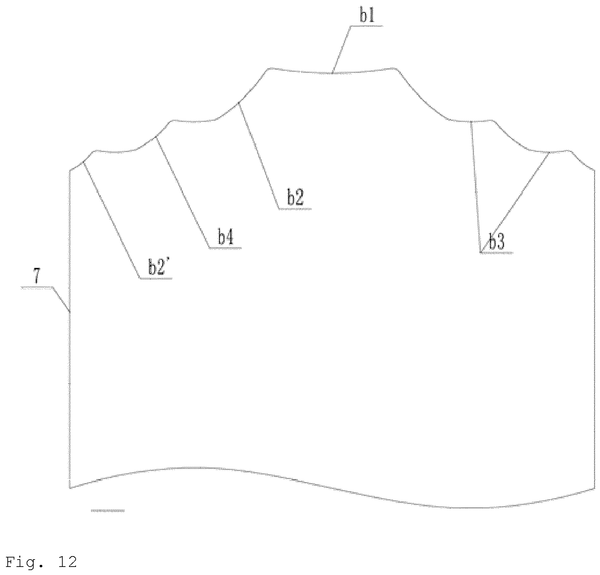

As shown in Figure 12, the cutting edge can be a curved structure, and the cutting edge of the curved structure is also determined by the connection of the two ends to determine the angle of the cutting edge. Based on Figure 11, further deformation is carried out, and the protruding corner 9 in the multi segment broken line cutting edge 8 is rounded, with a radius controlled between 0 and 0.5mm, so that the entire multi segment broken line cutting edge 8 appears as a curved structure with multiple corners 9.

This utility model increases the number of tooth tips of the sawtooth body 1 by adding a stepped blade with multiple corners 9 on the cutting edge of the sawtooth, thereby improving the sharpness and chip removal performance of the sawtooth body 1, achieving that each sawtooth can be cut, greatly improving cutting efficiency; At the same time, an odd number cutting edge of b1 'with a smaller inclination angle is added near the side edge 7 to trim the cutting surface, achieving edge trimming of the saw blade while cutting.

By combining integrated stepped teeth of different sizes and interleaving the corners 9 of the multi segment broken line cutting edge 8, the number of tooth tips is further increased, resulting in higher sharpness. The same saw blade can meet the cutting of 0.5-10mm thick aluminum profiles without the need to replace the saw blade, making the product more versatile.

## Claims

1. An integrated stepped tooth, comprising a sawtooth body (1), which is equipped with a front corner surface (4), a back corner surface (5), and a side surface (6). The intersection of the front corner surface (4) and the back corner surface (5) forms a multi segment polygonal cutting edge (8) for contacting the material to be cut, and the intersection of the front corner surface (4) and the side surface (6) forms a side edge (7); The feature is that the multi segment broken line cutting edge (8) includes a first cutting edge (b1) located in the middle position, with an even number of cutting edges (b2) on both sides of the first cutting edge (b1), and an odd number of cutting edges (b1 ') on one side of the side edge (7) facing the first cutting edge (b1), The odd segment cutting edge one (b1 ') is directly connected to the even segment cutting edge one (b2), or there is a stepped edge between the odd segment cutting edge one (b1') and the even segment cutting edge one (b2); The end of the step edge near the first cutting edge (b1) is the starting end, and the end of the step edge near the side edge (7) is the end. The step edge is provided with alternating odd segment cutting edge two (b3) and even segment cutting edge three (b4) between the starting end and the end. The starting end of the step edge is connected to even segment cutting edge one (b2) through odd segment cutting edge two (b3), The end of the stepped blade is connected to the odd segment cutting edge one (b1 ') through the even segment cutting edge three (b4).

2. The integrated stepped tooth according to claim 1, **characterized in that** the vertical distance between the connecting end of the odd segment cutting edge one (b1 ') and the side edge (7) and all the cutting edges (b1) is A, and the value of A decreases with the increase of the hardness of the material being cut.

3. The integrated stepped tooth according to claim 1, **characterized in that** the horizontal distance between the two ends of the odd segment cutting edge 1 (b1 ') is N, the width of the serrated body (1) is B, and N: B is 0.05-0.4; The angles between the odd segment cutting edge one (b1 '), odd segment cutting edge two (b3), and the side edge (7) are all θ 2, θ 2 is 70-110 °; The multi segment broken line cutting edge (8) is equipped with multiple corners (9), and a chamfer structure is arranged at the corner (9), with a radius R of 0-0.5mm of the chamfer structure; The angle between the even segment cutting edge one (b2), even segment cutting edge three (b4), and all the cutting edges (b1) is θ 1, θ 1 is 100-150 °; The length of the first cut edge (b1) is M, the width of the serrated body (1) is B, and M: B is 0.2-0.8.

4. An integrated stepped tooth, including a sawtooth body (1), which is equipped with a front corner surface (4), a back corner surface (5), and a side surface (6). The intersection of the front corner surface (4) and the back corner surface (5) forms a multi segment polygonal cutting edge (8) for contacting the material to be cut, and the intersection of the front corner surface (4) and the side surface (6) forms a side edge (7); The feature is that the multi segment broken line cutting edge (8) includes a first cutting edge (b1) located in the middle position, with an even segment cutting edge one (b2) on both sides of the first cutting edge (b1), an even segment cutting edge two (b2 ') on one side facing the first cutting edge (b1), and a stepped edge between the even segment cutting edge two (b2') and the even segment cutting edge one (b2); The end of the step edge near the first cutting edge (b1) is the starting end, and the end of the step edge near the side edge (7) is the end. The step edge is provided with alternating odd segment cutting edge two (b3) and even segment cutting edge three (b4) between the starting end and the end. The starting end of the step edge is connected to even segment cutting edge one (b2) through odd segment cutting edge two (b3), The end of the stepped blade is connected to the even segment cutting edge two (b2 ') through the odd segment cutting edge two (b3).

5. The integrated stepped tooth according to claim 4, **characterized in that** the vertical distance between the connecting end of the even segment cutting edge two (b2 ') and the side edge (7) and the first cutting edge (b1) is A, and the value of A decreases with the increase of the hardness of the material being cut; The angle between the odd segment cutting edge two (b3) and the side edge (7) is θ 2, θ 2 is 70-110 °.

6. The integrated stepped tooth according to claim 4, **characterized in that** the multi segment broken line cutting edge (8) is provided with multiple corners (9), and a chamfer structure is arranged at the corners (9), with a radius R of 0-0.5mm.

7. The integrated stepped tooth according to claim 4, **characterized in that** the angle between the even segment cutting edge one (b2), the even segment cutting edge three (b4), and all the cutting edges (b1) is θ 1, θ 1 is 100-150 °.

8. The integrated stepped tooth according to claim 4, **characterized in that** the length of the first chamfer (b1) is M, the width of the serrated body (1) is B, and M: B is 0.2-0.8.

9. A combination saw blade, comprising a saw blade body (2), which is equipped with multiple sawtooth seats (3), **characterized in that** each sawtooth seat (3) is respectively fixed with integrated step teeth as described in any one of claims 1 to 3, and the corners (9) of the corresponding multi segment broken line cutting edges (8) on the adjacent sawtooth seats (3) are staggered.

10. A combination saw blade, comprising a saw blade body (2), which is equipped with multiple sawtooth seats (3), **characterized in that** the integrated step teeth of claim 1 and the integrated step teeth of claim 5 are alternately arranged on the sawtooth seat (3), and the corners (9) of the corresponding multi segment broken line cutting edges (8) on the adjacent sawtooth seats (3) are staggered.
